# EUROPÄISCHE PATENTSCHRIFT

(11) **EP 2 177 728 B1**
(45) Veröffentlichungstag und Bekanntmachung des Hinweises auf die Patenterteilung: **12.12.2012**
(21) Anmeldenummer: 09012678.0
(22) Anmeldetag: 07.10.2009
(51) Int. Cl.: F01N 3/023, F01N 3/025, F01N 5/02, F01N 3/28, F01N 3/10

(54) **Verfahren und Vorrichtung zur thermischen Regeneration von Partikelfiltern an Brennkraftmaschinen mittels eines katalystischen Brenners**
Method and device for thermal regeneration of particulate filters on combustion engines with a catalytic burner
Procédé et dispositif de régénération thermique de filtres à particules sur des moteurs à combustion interne à l'aide d'un brûleur catalytique

(30) Priorität: 17.10.2008 DE 102008051830
(43) Veröffentlichungstag der Anmeldung: 21.04.2010
(73) Patentinhaber: DEUTZ Aktiengesellschaft, 51149 Köln (DE)
(72) Erfinder: Schraml, Stephan, Dr., 53639 Königswinter (DE); Miebach, Rolf, 50321 Brühl (DE); Broll, Peter, Dr., 51427 Bergisch-Gladbach (DE)

(56) Entgegenhaltungen:
- WO-A-2008/137028
- US-A- 3 067 002
- US-A- 5 660 800
- US-A1- 2006 096 282
- US-A1- 2007 289 292
- US-A1- 2008 083 215

## Beschreibung

Die Erfindung bezieht sich auf ein Verfahren und eine Vorrichtung zur thermischen Regeneration von Partikelfiltern an Brennkraftmaschinen, insbesondere von Dieselbrennkraftmaschinen, mittels eines katalytischen Brenners, wobei der katalytische Brenner eine Einrichtung zum Einbringen von Kohlenwasserstoffen in das Abgas und einen Oxidationskatalysator zur Umsetzung dieser Kohlenwasserstoffe (HC) aufweist, dessen bei der Durchströmung von katalytisch aktiven Strömungskanälen mit Gas, insbesondere Abgas, erzeugte exotherme Leistung dem nachgeschalteten Partikelfilter zuführbar ist.

Ein derartiges Verfahren und Vorrichtung ist allgemein bekannt. Problematisch ist, dass die katalytische Umsetzung im Oxidationskatalysator erst ab einer definierten Temperatur-Schwelle erfolgt, die bei zum Beispiel Pt/Pd-Mischbeschichtungen bei etwa 300° C liegt. Da diese Abgastemperaturen nicht in allen Betriebszuständen einer Brennkraftmaschine erreicht werden, sind für eine Regeneration des Partikelfilters zusätzliche Maßnahmen zur Anhebung des Abgastemperaturniveaus auf diesen Schwellwert notwendig.

Dokument US 2007/0289292 A1 offenbart ein Verfahren zur thermischen Regeneration von Partikelfiltern aus dem Stand der Technik.

Die am Oxidationskatalysator freigesetzte thermische Leistung kann über die pro Zeiteinheit zugemessene Menge an Kraftstoff, insbesondere Dieselkraftstoff, bestimmt werden, die dem Oxidationskatalysator über eine späte, nicht im Brennraum der Brennkraftmaschine umgesetzte, innermotorische Nacheinspritzung oder über einen zusätzlichen externen Dieselinjektor zugeführt werden kann.

Die Regenerationsfähigkeit innerhalb des kompletten motorischen Kennfeldes ist in der Regel nicht gegeben. Für die im Bereich der Industriebrennkraftmaschinen auftretenden extremen Schwachlastzyklen ist beispielsweise eine Anhebung der Abgastemperatur mit zusätzlichen motorischen Maßnahmen nicht ohne Weiteres möglich.

Für eine möglichst quantitative Umsetzung ohne nennenswerten HC-Schlupf durch den Oxidationskatalysator ist weiterhin eine sehr hohe Edelmetallbeladung der Beschichtung erforderlich. Unter HC-Schlupf wird eine nicht vollständige Umsetzung von Kohlenwasserstoffen (HC) in dem Oxidationskatalysator verstanden, die zu unerwünschten HC-Emissionen im Abgas führt. Die angesprochene hohe Edelmetallbeladung im Oxidationskatalysator stellt zudem einen erheblichen Anteil der Systemkosten dar.

Der Erfindung liegt die Aufgabe zugrunde, das gattungsbildende Verfahren und die Vorrichtung dahingehend zu verbessern, dass das Temperaturfenster innerhalb dessen der katalytische Brenner, das heißt, der zur Wärmeerzeugung eingesetzte Oxidationskatalysator, betrieben werden kann, nennenswert erweitert wird. Weiterhin sollen die Systemkosten, insbesondere in Form der Edelmetallbeladung im Oxidationskatalysator und/oder Partikelfilter, reduziert werden.

Diese Aufgabe wird gemäß dem erfindungsgemäßen Verfahren dadurch gelöst, dass ein Teil der vorwiegend im Austrittsbereich des Oxidationskatalysators vorliegenden Wärme durch eine innerhalb des Oxidationskatalysators erfolgende Wärmeübertragung zur Erhöhung der Temperatur im Einlassbereich des Katalysators genutzt wird.

Die entsprechende Vorrichtung sieht vor, dass der Oxidationskatalysator einen innerhalb des Oxidationskatalysators angeordneten Wärmetauscher zur Erhöhung der Temperatur im Einlassbereich des Oxidationskatalysators aufweist. Bekannt ist es, einen Teilstrom des den Oxidationskatalysator verlassenden Abgases unter Verwendung externer Leitungen insbesondere unter Verwendung eines externen Wärmetauschers zur Anhebung der Temperatur der in den Oxidationskatalysator einströmenden Abgase zu nutzen. Demgegenüber sind durch die erfindungsgemäße Ausgestaltung die Systemkosten durch Wegfall der externen Leitungen und Wärmetauscher gesenkt, der Wirkungsgrad ist durch geringere Temperaturverluste erhöht und der Bauraumbedarf ist ebenfalls durch den Wegfall der externen Komponenten reduziert.

Dabei wird erfindungsgemäß zumindest ein Teil der Abgase umgelenkt und durch Wärmeübergang im Oxidationskatalysator, insbesondere den Strömungskanälen im Oxidationskatalysator, vorwiegend dem Einlassbereich, zugeführt.

Durch diese Maßnahmen wird die Temperatur im Eingangsbereich des Oxidationskatalysator deutlich erhöht, so dass eine Erweiterung des Temperaturfensters, innerhalb dessen der katalytische Brenner betrieben werden kann, erfolgt. Dadurch verbessert sich auch das Umsatzverhalten, das heißt, es erfolgt eine Minimierung des HC-Schlupfes. Weiterhin lässt sich dadurch der Edelmetallanteil reduzieren, wobei eventuell auch die Beschichtung des nachgeschalteten Partikelfilters reduziert oder ganz eingespart werden kann.

Die Regenerationseinleitung kann bei deutlich niedrigen Abgastemperaturen erfolgen, da bereits eine geringe Umsetzungsrate reicht, um das System zu "zünden". So wird eine Erweiterung des Kennfeldes, in dem die Regeneration erfolgen kann, und eine Minimierung der motorischen Maßnahmen zur Abgastemperaturanhebung erreicht.

Weiterhin kann das System, sobald es einmal "gezündet" hat beziehungsweise ist, nicht mehr verlöschen, da die im hinteren Oxidationskatalysatorbereich vorhandene Wärmemenge kontinuierlich wieder zur "Neuzündung" genutzt wird.

Bekannte Oxidationskatalysator-Brennersysteme können "nach einer durch die thermische Trägheit des Systems bestimmten Zeit" verlöschen, beispielsweise durch drop-to-idle, das heißt die Regeneration wird in diesem Falle abgebrochen. Mit den erfindungsgemäßen Vorschlägen wird dies vermieden.

Eine besonders bevorzugte Möglichkeit zur Verfahrensdurchführung und die entsprechende Vorrichtung sieht vor, dass die Wärmeübertragung über Kanäle erfolgt, die mit den katalytisch wirksamen Strömungskanälen in wärmeübertragender Wirkverbindung stehen. Dabei weist der Oxidationskatalysator mit den Strömungskanälen in wärmeübertragender Wirkverbindung stehende von zumindest einem Teilstrom von die Strömungskanäle durchströmten Gases beaufschlagte Kanäle auf, die wiederum in weiterer Ausgestaltung auch katalytisch beschichtet sein können. Durch diese Ausgestaltung wird ein separater externer Wärmetauscher eingespart und somit ein besonders effizienter Wärmeaustausch zwischen den Strömungskanälen und den Kanälen erreicht.

Dabei ist in weiterer Ausgestaltung vorgesehen, dass die Strömungskanäle Strömungskanalebenen und die Kanäle Kanalebenen bilden, die abwechselnd aufeinander folgen. Die Strömungskanalebenen werden entsprechend von einer Einlassseite zu einer Austrittsseite hin von Abgas durchströmt, wobei die Auslassseite über Strömungsumlenkelemente insbesondere in Form eines Gehäusekastens mit einer Eintrittsseite der Kanalebenen verschaltet ist. Der Auslass aus den Kanalebenen kann als beliebig ausgestaltete Abströmfläche ausgestaltet sein. Die Ebenen können beliebige Winkel einschließen. Diese Ausgestaltungen stellen besonders bevorzugte Ausgestaltungen dar, da durch die dadurch erzielte innere Strömungsumkehr unter gleichzeitiger Wärmeübertragung ein sehr kompakt bauender und leistungsfähiger Oxidationskatalysator geschaffen ist. Durch diese Ausgestaltungen besteht die Möglichkeit, die Strömungsverläufe in den Strömungskanälen und den Kanälen nach Art eines Gegenstrom- oder Querstrom- oder Kreuzstrom-Wärmetauschers oder einer Kombination davon auszubilden. Hierbei ist dann auch ausdrücklich im Rahmen der Erfindung vorgesehen, einen Wärmeaustausch zwischen den Strömungskanälen und den Kanälen gezielt nur in Teilbereichen des Oxidationskatalysators vorzunehmen. Dies kann beispielsweise dadurch erreicht werden, dass ein Teil der Kanäle (gegebenenfalls über einen Teilabschnitt) thermisch isoliert zu den Strömungskanälen ausgebildet ist oder aber außen gegebenenfalls auch schaltbar außen oder innen an dem Oxidationskatalysator anzuordnen.

Der die Abströmflächen verlassende Abgasstrom kann zusammen mit dem gegebenenfalls auf der Auslassseite (der Strömungskanäle) abgeleiteten Teilstrom des Abgases dem Partikelfilter zugeführt werden.

Zur weiteren Erläuterung der Erfindung wird auf die Zeichnungen verwiesen, in denen ein Ausführungsbeispiel der Erfindung vereinfacht dargestellt ist. Es zeigen:
- Fig. 1: eine perspektivische Skizze eines Oxidationskatalysators mit Strömungsumlenkung,
- Fig. 2: einen Längsschnitt durch den Oxidationskatalysator gemäß Fig. 1 und
- Fig. 3: einen Querschnitt durch den Oxidationskatalysator gemäß Fig. 1 mit entsprechendem Strömungsverlauf.

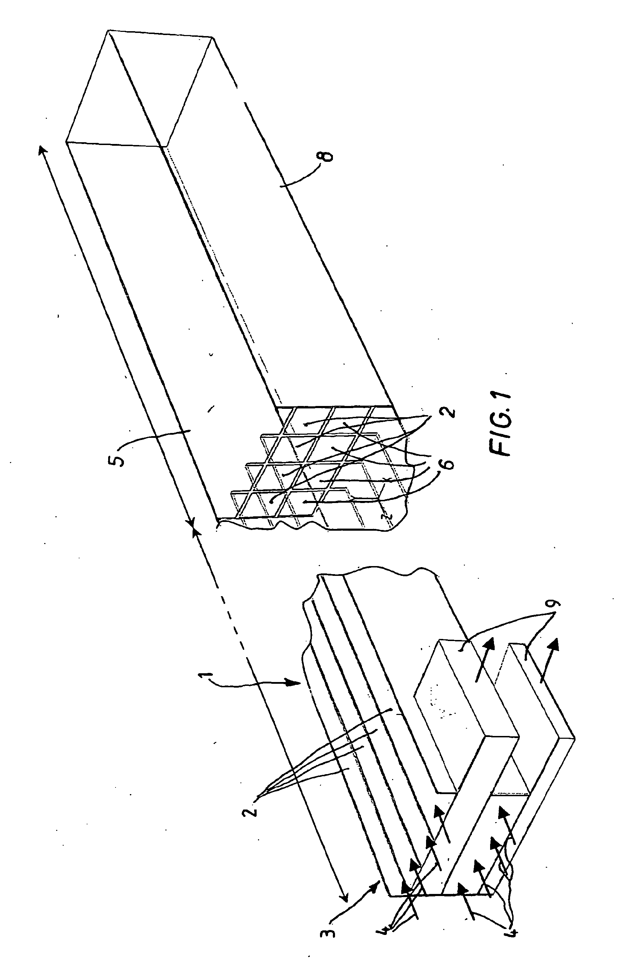

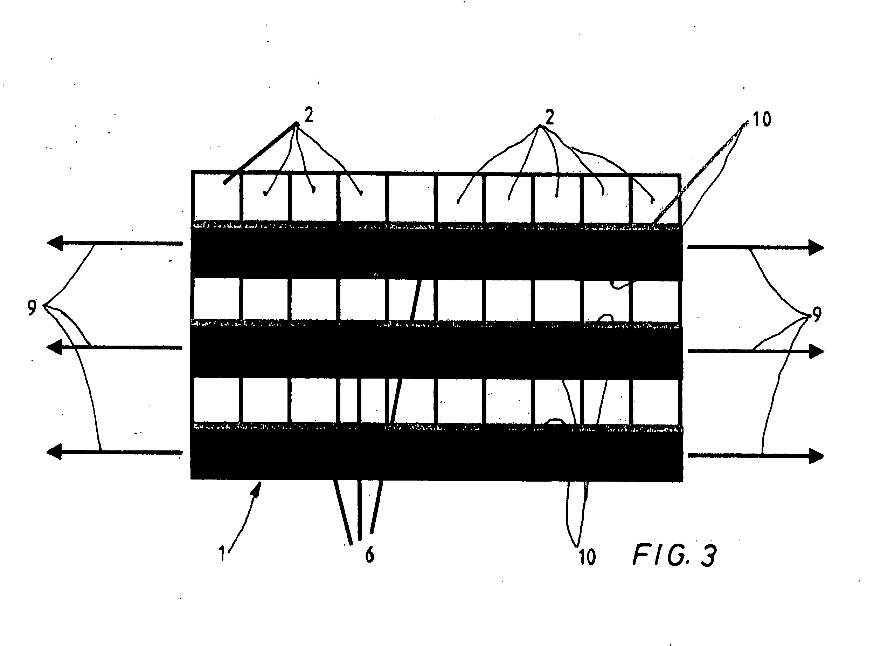

In den Fig. 1 - 3 ist, soweit im Einzelnen dargestellt, mit 1 allgemein ein Oxidationskatalysator bezeichnet, der katalytisch aktive Strömungskanäle 2 aufweist. Die Strömungskanäle 2 haben Einlassseiten 3, in die, gekennzeichnet durch Pfeile 4, Abgas von einer nicht dargestellten Brennkraftmaschine eintritt. Innerhalb der Strömungskanäle 2 erfolgt die katalytische Reaktion, das heißt, die Umsetzung der im Abgas befindlichen Kohlenwasserstoffe (HC), die exotherm vonstatten geht. Der Abgasstrom verlässt die Strömungskanäle 2 auf der Austrittseite 5 des Oxidationskatalysators 1. Wie den Fig. 1 - 3 zu entnehmen ist, sind Gruppen von Strömungskanälen 2 in je einer Strömungskanalebene angeordnet. Zwischen diesen Strömungskanalebenen sind Kanäle 6 angeordnet, die zu Kanalebenen zusammengefasst sind. Die Kanäle 6 verlaufen gemäß dem Ausführungsbeispiel nach Fig. 1 gegengleich zu den katalytisch reagierenden Strömungskanälen 2, können aber in anderen Ausführungen beliebige Winkel zueinander einschließen. Auch die Kanäle 6 können katalytisch wirksam sein, die Beschichtung kann sich aber von der der Strömungskanäle 2 unterscheiden.

An der Austrittseite 5 der Kanäle 2 ist zumindest ein Strömungsumlenkelement 8 vorgesehen, das die die katalytisch reagierenden Strömungskanäle 2 verlassenden Abgasströme in die Kanäle 6 umlenkt, so dass das Abgas im Gegenstrom zu der Strömung in den Strömungskanälen 2 in den Kanälen 6 verläuft. Die Kanäle 6 haben an der Einlassseite 3 des Oxidationskatalysators 1 Abströmflächen 9, durch die die Abgasströme austreten und zum Partikelfilter geleitet werden. Die Abströmflächen 9 sind in dem Ausführungsbeispiel gemäß Fig. 1 quer zu der Strömungsrichtung der Strömungskanäle 2 und der Kanäle 6 gerichtet, so dass ein ungehinderter Austritt des Abgases aus dem Oxidationskatalysator an dessen Einlassseite erfolgt. Von den Abströmflächen 9 wird das Abgas in den Partikelfilter geleitet. Es kann auch vorgesehen sein, einen Teilstrom des Abgases auf der Austrittsseite 5 durch beispielsweise variable Austrittsöffnungen in dem Strömungsumkehrelement abzuleiten und gegebenenfalls zusammen mit dem aus den Abströmflächen austretenden Abgas in den Partikelfilter einzuleiten.

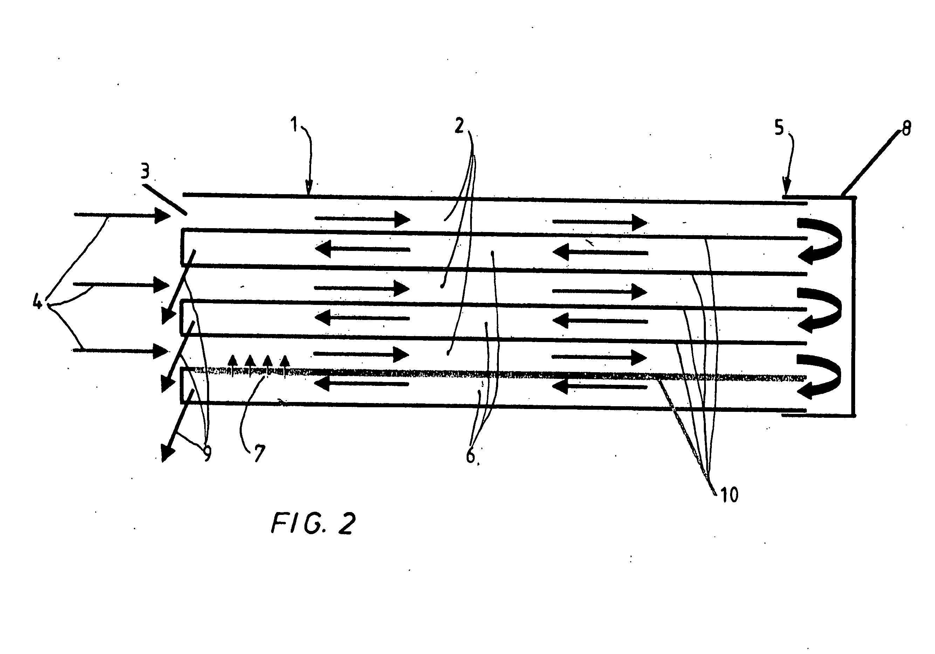

Durch diese Ausgestaltung der Erfindung entstehen große Wärmeübertragungsflächen 10, durch die die Wärme, die in dem den Oxidationskatalysator verlassenden Abgasstrom enthalten ist, den Oxidationskatalysator bzw. dessen katalytisch reagierenden Strömungskanälen 2 (Wärmeübergangspfeile 7 in Fig. 2) teilweise wieder zugeführt wird.

### Bezugszeichen

- 1: Oxidationskatalysator
- 2: katalytisch reagierender Strömungskanal
- 3: Einlassseite
- 4: Pfeil
- 5: Austrittseite
- 6: Kanal
- 7: Wärmeübergangspfeile
- 8: Strömungsumlenkelement
- 9: Abströmfläche
- 10: Wärmeübertragungsflächen

## Patentansprüche

1. Verfahren zur thermischen Regeneration von Partikelfiltern an Brennkraftmaschinen, insbesondere von Dieselbrennkraftmaschinen, mittels eines katalytischen Brenners, wobei der katalytische Brenner eine Vorrichtung zum Einbringen von Kohlenwasserstoffen in das Abgas und einen Oxidationskatalysator zur Umsetzung dieser Kohlenwasserstoffe (HC) aufweist, dessen bei der Durchströmung von katalytisch aktiven Strömungskanälen mit Gas, insbesondere Abgas, erzeugte exotherme Leistung dem nachgeschalteten Partikelfilter zuführbar ist.
**dadurch gekennzeichnet, dass** zumindest ein Teil der im Austrittsbereich des Oxidationskatalysators (1) vorliegenden Wärme durch eine innerhalb des Oxidationskatalysators erfolgende Wärmeübertragung zur Erhöhung der Temperatur im Einlassbereich des Oxidationskatalysators benutzt wird.

2. Verfahren nach Anspruch 1,
**dadurch gekennzeichnet, dass** die Erhöhung der Temperatur im Einlassbereich durch zumindest teilweise Strömungsumlenkung von Gas innerhalb des Oxidationskatalysators erfolgt.

3. Verfahren nach Anspruch 2,
**dadurch gekennzeichnet, dass** die Wärmeübertragung über Kanäle (6) erfolgt, die mit den katalytisch aktiven Strömungskanälen (2) in wärmeübertragender Wirkverbindung stehen.

4. Verfahren nach Anspruch 3,
**dadurch gekennzeichnet, dass** die Kanäle (6) ebenfalls katalytisch wirksam sind.

5. Vorrichtung zur thermischen Regeneration von Partikelfiltern an Brennkraftmaschinen, insbesondere von Dieselbrennkraftmaschinen, mittels eines katalytischen Brenners, wobei der katalytische Brenner eine Vorrichtung zum Einbringen von Kohlenwasserstoffen in das Abgas und einen Oxidationskatalysator zur Umsetzung dieser Kohlenwasserstoffe (HC) aufweist, dessen bei der Durchströmung von katalytisch aktiven Strömungskanälen mit Gas, insbesondere Abgas, erzeugte exotherme Leistung dem nachgeschalteten Partikelfilter zuführbar ist,
**dadurch gekennzeichnet, dass** der Oxidationskatalysator (1) einen innerhalb des Oxidationskatalysators (1) angeordneten Wärmetauscher zur Erhöhung der Temperatur im Einlassbereich des Oxidationskatalysators (1) aufweist.

6. Vorrichtung nach Anspruch 5,
**dadurch gekennzeichnet, dass** der Oxidationskatalysator (1) mit den Strömungskanälen (2) in wärmeübertragender Wirkverbindung stehende, von zumindest einem Teilstrom von die Strömungskanäle durchströmten Gases beaufschlagte Kanäle (6) aufweist.

7. Vorrichtung nach Anspruch 6,
**dadurch gekennzeichnet, dass** die Strömungskanäle (2) und die Kanäle (6) Strömungskanalebenen und Kanalebenen mit zwischen den Ebenen liegenden Wärmeübertragungsflächen (7) bilden, die abwechselnd aufeinander folgen.

8. Vorrichtung nach Anspruch 7,
**dadurch gekennzeichnet, dass** Strömungskanalebenen und Kanalebenen einen beliebigen Winkel zueinander bilden.

9. Vorrichtung nach einem der Ansprüche 5 bis 8,
**dadurch gekennzeichnet, dass** der die Abströmflächen (9) der Kanäle (6) verlassende Abgasstrom zusammen mit dem die Strömungskanäle (2) verlassenden Teilstrom des Abgases dem Partikelfilter zuführbar ist.

## Claims

1. Method for the thermal regeneration of particle filters on internal combustion engines, in particular of diesel internal combustion engines, by means of a catalytic burner, wherein the catalytic burner has a device for introducing hydrocarbons into the exhaust gas and has an oxidation catalytic converter for converting said hydrocarbons (HC), the exothermic heat of which oxidation catalytic converter generated when gas, in particular exhaust gas, flows through catalytically active flow ducts can be supplied to the particle filter arranged downstream,
**characterized in that** at least a part of the heat present in the outlet region of the oxidation catalytic converter (1) is utilized, by means of a heat transfer which takes place within the oxidation catalytic converter, to increase the temperature in the inlet region of the oxidation catalytic converter.

2. Method according to Claim 1,
**characterized in that** the increase in the temperature in the inlet region is realized by at least partial flow diversion of gas within the oxidation catalytic converter.

3. Method according to Claim 2,
**characterized in that** the heat transfer takes place via ducts (6) which are operatively connected in heat-transferring fashion to the catalytically active flow ducts (2).

4. Method according to Claim 3,
**characterized in that** the ducts (6) are likewise catalytically active.

5. Method for the thermal regeneration of particle filters on internal combustion engines, in particular of diesel internal combustion engines, by means of a catalytic burner, wherein the catalytic burner has a device for introducing hydrocarbons into the exhaust gas and has an oxidation catalytic converter for converting said hydrocarbons (HC), the exothermic heat of which oxidation catalytic converter generated when gas, in particular exhaust gas, flows through catalytically active flow ducts can be supplied to the particle filter arranged downstream,
**characterized in that** the oxidation catalytic converter (1) has, arranged within the oxidation catalytic converter (1), a heat exchanger for increasing the temperature in the inlet region of the oxidation catalytic converter (1).

6. Device according to Claim 5,
**characterized in that** the oxidation catalytic converter (1) has ducts (6) which are operatively connected in heat-transferring fashion to the flow ducts (2) and which are subjected to at least a partial flow of gas which has flowed through the flow ducts.

7. Device according to Claim 6,
**characterized in that** the flow ducts (2) and the ducts (6) form flow duct planes and duct planes with heat transfer surfaces (7) situated between the planes, which flow duct planes and duct planes alternate in succession.

8. Device according to Claim 7, **characterized in that** flow duct planes and duct planes form an arbitrary angle with respect to one another.

9. Device according to one of Claims 5 to 8, **characterized in that** the exhaust-gas flow exiting the outflow surfaces (9) of the ducts (6) can be supplied, together with the partial flow of the exhaust gas exiting the flow ducts (2), to the particle filter.

## Revendications

1. Procédé de régénération thermique de filtres à particules de moteurs à combustion interne, en particulier de moteurs diesel, au moyen d'un brûleur catalytique,
le brûleur catalytique présentant un système destiné à apporter des hydrocarbures dans les gaz d'échappement et un catalyseur d'oxydation qui convertit ces hydrocarbures (HC) et dont la puissance exothermique dégagée lorsque des gaz traversent des canaux d'écoulement à activité catalytique peut être apportée aux filtres à particules raccordés en aval, **caractérisé en ce que**
au moins une partie de la chaleur présente dans la zone de sortie du catalyseur d'oxydation (1) est utilisée par transfert de chaleur à l'intérieur du catalyseur d'oxydation en vue d'augmenter la température de la partie d'entrée du catalyseur d'oxydation.

2. Procédé selon la revendication 1, **caractérisé en ce que** l'augmentation de la température dans la partie d'entrée s'effectue par au moins une déviation temporaire de l'écoulement de gaz à l'intérieur du catalyseur d'oxydation.

3. Procédé selon la revendication 2, **caractérisé en ce que** le transfert de chaleur s'effectue par des canaux (6) qui coopèrent avec les canaux d'écoulement (2) à activité catalytique pour transférer la chaleur.

4. Procédé selon la revendication 3, **caractérisé en ce que** les canaux (6) exercent également une activité catalytique.

5. Système de régénération thermique de filtres à particules de moteurs à combustion interne et en particulier de moteurs diesel, au moyen d'un brûleur catalytique,
le brûleur catalytique présentant un système destiné à apporter des hydrocarbures dans les gaz d'échappement et un catalyseur d'oxydation qui convertit ces hydrocarbures (HC) et dont la puissance exothermique dégagée lorsque des gaz traversent des canaux d'écoulement à activité catalytique peut être apportée aux filtres à particules raccordés en aval, **caractérisé en ce que**
le catalyseur d'oxydation (1) présente un échangeur de chaleur disposé à l'intérieur du catalyseur d'oxydation (1) et destiné à augmenter la température de la partie d'entrée du catalyseur d'oxydation (1).

6. Système selon la revendication 5, **caractérisé en ce que** le catalyseur d'oxydation (1) présente des canaux (6) sur lesquels est injectée au moins une partie de l'écoulement du gaz qui traverse les canaux d'écoulement et coopérant avec les canaux d'écoulement (2) pour échanger de la chaleur.

7. Système selon la revendication 6, **caractérisé en ce que** les canaux d'écoulement (2) et les canaux (6) forment des plans de canaux d'écoulement et des plans de canaux avec entre les plans des surfaces (7) de transfert de chaleur qui se succèdent en alternance.

8. Système selon la revendication 7, **caractérisé en ce que** les plans des canaux d'écoulement et les plans des canaux forment les uns avec les autres un angle quelconque.

9. Système selon l'une des revendications 5 à 8, **caractérisé en ce que** l'écoulement de gaz d'échappement qui quitte les surfaces de sortie (9) des canaux (6) peut être amené aux filtres à particules en même temps que l'écoulement partiel de gaz d'échappement qui quitte les canaux d'écoulement (2).
